# EUROPÄISCHE PATENTANMELDUNG

(11) **EP 3 421 979 A1**
(43) Veröffentlichungstag der Anmeldung: **02.01.2019**
(21) Anmeldenummer: 17178628.8
(22) Anmeldetag: 29.06.2017
(51) Int. Cl.: G01N 23/04

(54) **VERFAHREN UND VORRICHTUNG ZUR ERMITTLUNG VON KORREKTURDATEN FÜR EIN CT-SYSTEM**

(71) Anmelder: Fraunhofer-Gesellschaft zur Förderung der angewandten Forschung e.V., 80686 München (DE)
(72) Erfinder: FELLA, Christian, 74243 Langenbrettach (DE); ZABLER, Simon, 97084 Würzburg (DE)
(74) Vertreter: Schenk, Markus

(57) **Zusammenfassung**

Ein Verfahren zur Ermittlung von Korrekturdaten für ein CT-System umfasst den Schritt des Vermessens eines Objektmanipulators mittels eines Laserinterferometers und/oder des Vermessens einer Röntgenquelle mittels eines Laserinterferometers, um die Korrekturdaten zu ermitteln.

## Beschreibung

Ausführungsbeispiele der vorliegenden Erfindung beziehen sich auf ein Verfahren zur Ermittlung von Korrekturdaten für ein CT-System sowie auf eine entsprechende Vorrichtung. Weitere Ausführungsbeispiele beziehen sich auf ein CT-System umfassend eine entsprechende Vorrichtung. Bevorzugte Ausführungsbeispiele beziehen sich auf eine laser-interferometrische Messung sowie auf eine Korrektur von Abweichung in der idealen Scan-Trajektorie bei der Computertomographie (CT).

Als CT bezeichnet man Messverfahren der Röntgentechnik, welche aus mehreren (typischerweise hunderten) Durchstrahlungsbildern Volumendaten einer Probe rekonstruieren. Die mehreren Durchstrahlungsbilder werden während einer Relativbewegung zwischen einem Objekt gegenüber der Röntgenapparatur bestehend aus Röntgenquelle und Röntgendetektor ermittelt. Häufig drehen sich hierbei, z. B. in der medizinischen Computertomographie, Röntgenquelle und Detektor um das Objekt. In der industriellen Computertomographie, z.B. bei sogenannten Mikro/Nanofokus-CTs (für kleinste Objekte) wird häufig das Objekt mit einem Manipulator, z. B. einem Drehteller in einem Röntgenstrahlengang (definiert durch die Röntgenquelle und den Röntgendetektor) rotiert. Hierbei kann beispielsweise eine Kreisbahn oder Helix-Trajektorie genutzt werden.

Der Ansatz mit dem rotierenden Objekt bzw. der rotierenden Probe eignet sich vor allem dann, wenn die Probe ist sehr klein ist. Hierbei wird dann im Regelfall ein Manipulator mit einer hochgenauen Probendrehachse verwendet.

Insbesondere bei kleinen Proben und hohen Auflösungen wirken sich Abweichungen von der idealen Scan-Geometrie/Trajektorie auf die Qualität der Rekonstruktion aus. Es werden daher im Stand der Technik sehr genaue, ausreichend präzise, oft luftgelagerte mechanische Achsen verwendet. Driftbewegungen werden vor oder während der CT-Datenrekonstruktion per Software korrigiert. Hierbei kommen teilweise Korrekturbilder auf Basis von zusätzlich nach einem Scan aufgenommenen Aufnahmen zum Einsatz. Selten werden hierbei auf dem Messobjekt so genannte "Tracker" (Partikel) angebracht, welche eine Rekonstruktion der Probenbewegung mithilfe von Bildverarbeitung erlauben. Für die Softwarekorrektur existieren iterative Algorithmen, die auf Basis von Datenkonsistenz versuchen, die Abweichungen der idealen Scan-Geometrie zu ermitteln. Diese Ansätze führen allesamt nicht immer zu einer optimalen Rekonstruktion. Deshalb besteht der Bedarf nach einem verbesserten Ansatz.

Aufgabe der vorliegenden Erfindung ist es, insbesondere für die Computertomographie von sehr kleinen Proben ein Konzept zu schaffen, das eine verbesserte Korrektur von Lagefehlern ermöglicht.

Die Aufgabe wird durch die unabhängigen Patentansprüche gelöst.

Ausführungsbeispiele der vorliegenden Erfindung schaffen ein Verfahren zur Ermittlung von Korrekturdaten für ein CT-System mit einem um eine physische Rotationsachse rotierbaren Objektmanipulator, einer einen Brennfleck aufweisende Röntgenquelle und einem Röntgendetektor. Das Verfahren umfasst je nach Umsetzung den Schritt des Vermessens des Objektmanipulators mittels eines Laserinterferometers und/oder des Vermessens der Röntgenquelle mittels des Laserinterferometers, um ausgehend von der Vermessung die Korrekturdaten zu ermitteln.

Ausführungsbeispielen der vorliegenden Erfindung liegt die Kenntnis zugrunde, dass mithilfe von Laserinterferometern, welche auf den Objektmanipulator (wie z. B. dem Probestab) bzw. auf die Röntgenquelle (insbesondere auf das Strahlaustrittsfenster der Anode) gerichtet sind, Längenänderungen sogar bis zu 1 nm genau gemessen werden kann. Diese Abstandsänderung entlang der Trajektorie (Rotation des Objektmanipulators) und während des Betriebes kann also getrackt werden, so dass hieraus Korrekturdaten ableitbar sind, die einerseits die Exzentrizität des Objektmanipulators und andererseits den Drift der Strahlenquelle beschreiben. Diese Korrekturdaten werden dann entsprechend Ausführungsbeispielen entweder aktiv oder passiv berücksichtigt, so dass Fehler infolge des Taumelfehlers/Wackelns der Probendrehachse bei der Computertomographie oder infolge des Drifts im Koordinatensystem von Probe und Anode (verursacht durch thermische Veränderung während des Scans) kompensiert werden können.

Da, wie angedeutet insbesondere die Lageveränderung interessant ist, wird entsprechend weiteren Ausführungsbeispielen der Schritt des Vermessens während des Betriebs, d.h. z.B. für mehrere Punkte auf der Trajektorie des um die physische Drehachse rotierbaren Objektmanipulators, als für mehrere Durchstrahlungsaufnahmen wiederholt, so dass für jeden der mehreren Punkte der Trajektorie / für jede der mehreren Durchstrahlungsaufnahmen Korrekturdaten ermittelt und ausgegeben werden können.

Entsprechend weiteren Ausführungsbeispielen erfolgt das Vermessen des Objektmanipulators durch Anpeilen zumindest eines ersten Punktes der physischen Drehachse, um einen ersten Abstand zwischen einem Referenzpunkt des CT-Systems und dem angepeilten Punkt der physischen Drehachse zu ermitteln. Dieser Schritt kann entsprechend weiteren Ausführungsbeispielen für eine Mehrzahl von Punkten, z. B. mit einer Mehrzahl von Laserinterferometern wiederholt werden. Bevorzugt ist es so, dass insgesamt vier Punkte der physischen Drehachse angepeilt werden, beispielsweise je zwei Punkte in einer Ebene, die jeweils die entsprechend Ausführungsbeispielen auch noch senkrecht zu der physischen Drehachse verläuft, angeordnet sind. Diese zwei Messpunkte können beispielsweise senkrecht oder mit einem anderen vorbestimmten Winkel in der gemeinsamen Ebene liegen. Durch diese vier in Bezug auf die Messpunkte ermittelten Abstände ist die exakte Bestimmung der Koordinaten der Probendrehachse in zwei Translationsfreiheitsgraden und in zwei Verkippfreiheitsgraden möglich.

Entsprechend einem weiteren Ausführungsbeispiel kann auch noch ein fünfter Punkt, nämlich die Höhe bestimmt werden, wobei dann bevorzugterweise nicht die Zylindermantelfläche, d.h. also nicht die physische Drehachse, sondern ein anderer Bereich des Objektmanipulators angepeilt wird. Durch diese Höhenachse ist dann der dritte translatorische Freiheitsgrad bestimmbar. Ausgehend von der Bestimmung des Taumelfehlers entlang der ein oder mehreren translatorischen Freiheitsgrade und entlang der ein oder mehreren rotorischen Freiheitsgrade kann dann der Taumelfehlern über die Rotationsbewegung aufgetragen werden, so dass also jeder Durchstrahlungsaufnahme (zugehörig zu einer Position auf der Trajektorie) Korrekturdaten umfassend die Beschreibung der Taumelfehler in den genannten Dimension zugeordnet werden kann.

Entsprechend einem weiteren Ausführungsbeispiel kann der Schritt des Vermessens der Röntgenquelle den des Schrittes des Anpeilens eines Punktes der Röntgenquelle, wie z.B. des Brennfleckes, einer Anode der Röntgenquelle, oder eines Strahlaustrittsfensters umfassen. Das Anpeilen erfolgt wiederum mittels eines Laserinterferometers und hat die Zielsetzung einen Abstand zwischen einem weiteren Referenzpunkt des Systems und der Röntgenquelle zu ermitteln. Der Brennfleck oder die Anode bzw. allgemein die abbildenden Teile der Röntgenquellen dehnen sich aufgrund von thermischer Belastung während des Betriebs aus, so dass es zu einem thermischen Driften kommt, welcher so vorteilhafterweise bestimmbar ist.

Entsprechend einem Ausführungsbeispiel umfasst das Verfahren den Schritt des Berechnens von Korrekturdaten. Diese können beispielsweise derart erfolgen, dass eine Differenzbildung von zumindest zwei Abständen, wie z. B. von zwei Abständen, welche mit ein und demselben Sensor für zwei unterschiedliche Punkte auf der Trajektorie ermittelt wurden, erfolgt. Alternativ kann auch eine Differenzbildung von beispielsweise zwei vertikal versetzten Sensoren erfolgen, um eine Verkippung zu bestimmen. Entsprechend einer weiteren Variante kann eine Differenzbildung zwischen einem Abstand zu der Röntgenquelle und einem Abstand zu der Drehachse berechnet werden, um einen Objekt-Quelle-Abstand zu bestimmen. Diese so berechneten Differenzen bzw. diese allgemeinen mathematischen Funktionen werden dann als Korrekturdaten entsprechend Ausführungsbeispielen ausgegeben.

Softwaretechnisch ist es möglich, anhand dieser Korrekturdaten die CT-Rekonstruktion zu unterstützen bzw. exaktere und nicht eine verfälschte Geometrie zu verwenden. Deshalb umfasst entsprechend einem Ausführungsbeispiel das Verfahren den Schritt der CT-Rekonstruktion unter Berücksichtigung der Korrekturdaten. Alternativ wäre es auch denkbar, dass die Korrekturdaten dazu genutzt werden, um ein Nachführen des Objektmanipulators zu ermöglichen. Dies kann beispielsweise derart erfolgen, dass der Objektmanipulator um einen Hexapod erweitert ist, um so den Taumelfehler zu kompensieren bzw. allgemein die ermittelten Fehler zu kompensieren.

Alle oben erläuterten Verfahren können entsprechend Ausführungsbeispielen mittels oder unter Zuhilfenahme eines Computers durchgeführt werden. Deshalb bezieht sich ein Ausführungsbeispiel auf ein Computerprogramm.

Entsprechend weiteren Ausführungsbeispielen wird eine Vorrichtung geschaffen, die das oben erläuterte Verfahren durchführt. Diese Vorrichtung umfasst in der einfachsten Ausführungsform ein Laserinterferometer, wie z. B. Michelson-Laserinterferometer oder einen Fabry-Perot-Interferometer. Entsprechend einer erweiterten Ausführungsform umfasst die Vorrichtung eine Mehrzahl an Laserinterferometern. Jeder der Laserinterferometer ist auf bestimmte Punkte der physischen Drehachse ausgerichtet, wobei bei den Punkten von einem Stillstand der physischen Drehachse ausgegangen wird. Entsprechend weiteren Ausführungsbeispielen ist zumindest ein Laserinterferometer auf den Brennfleck, die Anode oder das Strahlaustrittsfenster der Röntgenquelle ausgerichtet. Entsprechend Ausführungsbeispielen sind die ein oder mehreren Laserinterferometer an einem Referenzelement, wie z. B. einem Impala-Hartgestein oder einem Marmorblock angeordnet; diese Gesteine zeichnen sich durch geringen Wärmeausdehnung aus. Dieses Referenzelement ist hier beispielsweise mittels gestrichelten Linien illustriert und mit dem Bezugszeichen 34 versehen. Es können alternativ auch mehrere Impala-Hartgesteinblöcke bzw. Referenzelemente vorliegen, wobei bevorzugterweise dann die geometrische Beziehung derselben zueinander und insbesondere die geometrische Beziehung des ein oder mehreren Referenzelements zu dem CT-System bekannt ist.

Entsprechend Ausführungsbeispielen umfasst die physische Drehachse eine (hochgenau gefertigte) Zylindermantelfläche. Hierbei eignet sich beispielsweise ein Saphirstab, da dieser sehr genau insbesondere für die Anwendung Mikro/Nanofokus-CTs fertigbar ist. An dieser Stelle sei angemerkt, dass die geometrischen Abmessungen der physischen Drehachse sowie die Beziehung zu der Objektaufnahme am Ende der physischen Drehachse bekannt sind.

Ein weiteres Ausführungsbeispiel bezieht sich auf ein CT-System, mit den bereits oben erläuterten Einheiten sowie der oben erläuterten Vorrichtung. Entsprechend Ausführungsbeispielen kann das CT-System einen Rekonstruktionsberechner aufweisen, zusätzlich zu den Durchstrahlungsaufnahmen als Eingangsdaten die entsprechend dem obigen Verfahren bzw. mittels der obigen Vorrichtung ermittelten Korrekturdaten erhält und basierend hierauf die Rekonstruktion durchführt. Entsprechend einem weiteren Ausführungsbeispiel ist es möglich eine aktive Nachführung des Objektmanipulators, ausgehend von den Korrekturdaten durchzuführen. Hierbei eignet sich beispielsweise die Verwendung eines Hexapods, der translatorisch und rotorisch das Objekt entsprechend der Abweichung von Soll und Ist-Trajektorie bzw. entsprechend dem thermischen Drift des Brennflecks nachführt.

Weiterbildungen sind Unteransprüchen definiert. Ausführungsbeispiele der vorliegenden Erfindung werden anhand der beiliegenden Zeichnungen erläutert. Es zeigen:
- Fig. 1: eine schematische Darstellung eines CT-Systems in Kombination mit einem Laserinterferometer zur Illustration des Verfahrens und der Vorrichtung für die Ermittlung der Korrekturdaten gemäß Ausführungsbeispielen;
- Fig. 2a: eine schematische Darstellung eines Objektmanipulators, der durch ein oder mehrere Sensoren auf Laserinterferometriebasis überwacht wird gemäß einem weiteren Ausführungsbeispiel;
- Fig. 2b: eine schematische Darstellung einer Röntgenquelle, die durch zumindest einen Sensor auf Laserinterferometriebasis überwacht wird gemäß einem weiteren Ausführungsbeispiel; und
- Fig. 3: eine schematische Darstellung eines CT-Systems mit einer modifizierten Manipulationseinheit gemäß einem weiteren Ausführungsbeispiel.

Bevor nachfolgend Ausführungsbeispiele der vorliegenden Erfindung anhand der beiliegenden Zeichnungen erläutert werden, sei darauf hingewiesen, dass gleich wirkende Elemente und Strukturen mit gleichen Bezugszeichen versehen sind, so dass die Beschreibung derer aufeinander anwendbar bzw. austauschbar ist.

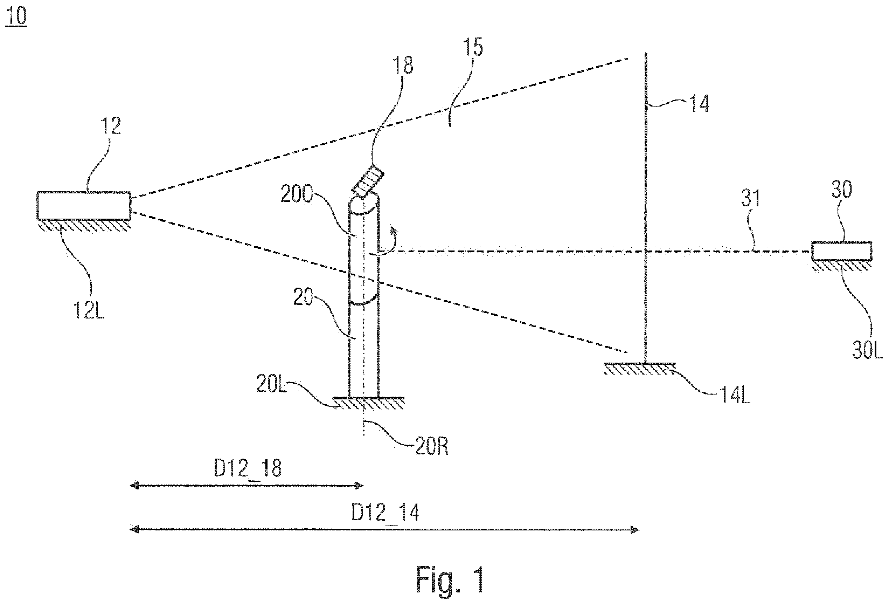

Fig. 1 zeigt ein Röntgensystem 10 mit einer Röntgenquelle 12 sowie einem Röntgendetektor 14. In dem Strahlengang 15 zwischen Röntgenquelle 12 ist ein Objektmanipulator 20 mit dem zu rotierenden Objekt 18 angeordnet.

Röntgenquelle 12 und Strahlendetektor 14 sind beispielsweise gegenüber der Umgebung fixiert, wie durch die zugehörigen Lager 12L und 14L angezeigt ist. Durch die Abstrahlrichtung der Röntgenquelle 12 sowie die Detektionsfläche des Detektors 14 wird der konusförmige bzw. fächerförmige Strahlengang 15 definiert. Dieser ist abhängig von dem Abstand der Quelle 12 zu Detektor 14, der idealerweise über die Messung konstant ist (insbesondere wenn Röntgenquelle und Detektor fixiert sind) oder allgemein ausgedrückt zumindest für jedes Einzelbild (Projektion) bekannt ist. Der Abstand ist mit dem Bezugszeichen D12_14 gekennzeichnet.

Ebenso wie Röntgenquelle 12, Röntgendetektor 14 ist der Manipulator 20 gegenüber der Umgebung fixiert, wie durch das Lager 20L kenntlich gemacht ist. Der Manipulator 20 ist ausgebildet, um das Objekt 18 im Strahlengang 15 zu bewegen, z. B. zu rotieren, wie anhand des Pfeiles deutlich gemacht ist. Hierbei dreht sich ein Teil des Manipulators, z. B. das Oberteil 20O des Manipulators 20, das auch als Manipulatorstab oder physikalische Drehachse bezeichnet werden kann. Das Oberteil 20O hat eine Aufnahme für das Objekt 18 und rotiert um eine Rotationsachse 20R, idealerweise so, dass das Objekt 20 direkt auf der Rotationsachse 20R rotiert wird, ohne dass es durch die Rotation zu einem Taumeln kommt. Ein derartiges Taumeln hat beispielsweise Einfluss auf den Abstand zwischen Quelle 12 und Objekt 18. Dieser Abstand ist mit dem Bezugszeichen D12_18 markiert.

Da in der Realität häufig es zu einem Taumeln des Manipulators 20 kommt, können sich auch die Abstände D12_18 sowie D12_14 entlang der Trajektorie / während des Betriebes verändern. Allgemein kommt es zu einem so genannten Taumelfehler (Wackeln des Probedrehtellers 20). Ursachen hierfür sind beispielsweise dass die mechanische Probendrehachse nicht optimal gelagert ist. In anderen Worten ausgedrückt heißt das also, dass die gewünschte Objektbewegung (Trajektorie) durch einen unerwünschten Anteil (z. B. eine translatorische Bewegung) überlagert ist. Dieser unerwünschte Anteil (hier als Taumelfehler bezeichnet) stellt im Wesentlichen eine Abweichung der realen Bewegungsbahn von der idealen Bewegungsbahn dar. Der Taumelfehler kann mehrere Dimensionen haben, nämlich eine translatorische Verschiebung um zumindest einen der drei möglichen Freiheitsgrade und/oder eine Verkippung um zumindest einen der zwei Kipp-Freiheitsgrade.

Des Weiteren kann es zu einem Drift im Koordinatensystem von Probe und Anode dadurch kommen, dass eine thermische Veränderung während des Scans insbesondere eine thermische Veränderung in der Röntgenquelle 12 (oder des röntgenimitierenden Bereichs der Strahlenquelle 12, wie z. B. des Brennflecks) zu einer geometrischen Verschiebung im CT-System 10 führt. Eine derartiger thermischer Drift verändert den Vergrößerungsmaßstab, so dass hier die Messqualität folglich stark beeinträchtigt wird. Dies führt zu einer nicht optimalen CT-Datenrekonstruktion.

Um dennoch eine gute Rekonstruktion zu ermöglichen, wird nachfolgend ein Konzept vorgestellt, wie die Taumelfehler bzw. thermischen Drifts bestimmt werden können, um dann beispielsweise die erkannten und vermessenen Lagefehler (Taumelfehler bzw. den Drift) bei der Rekonstruktion zu berücksichtigen oder Gegenmaßnahmen zu ergreifen, um die Lagefehler zu kompensieren.

Entsprechend einem Ausführungsbeispiel werden nun messtechnisch die Fehler verursachenden Einheiten, nämlich der Objektmanipulator 20 bzw. Objektträgerstab 20O oder die Röntgenquelle 12 bzw. um genau zu sein der Brennfleck überwacht. Diese Überwachung erfolgt bevorzugterweise während des Betriebes, d.h. also während der evtl. auftretenden thermischen Veränderung bei der Röntgenquelle 12 oder während des Abfahrens der Trajektorien. Nachfolgend wird der Ansatz ausschließlich anhand der Überwachung des Manipulators oder, um genau zu sein, anhand der Überwachung des Objektstabes 20O erläutert, wobei dieser Ansatz selbstverständlich auch auf das Überwachen der Röntgenquelle 12 übertragbar ist.

Bei dem hier vorgeschlagenen Konzept wird mithilfe von einem Laserinterferometer, wie z. B. nach dem Michelson oder Fabry-Perot-Prinzip, die Position des rotierenden Oberteils 20O des Manipulators 20 überwacht. Das Überwachen erfolgt mit dem Laserinterferometer, das mit dem Bezugszeichen 30 versehen ist, und zwar gegenüber einem Referenzpunkt, der gegenüber der Umgebung fixiert ist (wie anhand der Lager 30L illustriert). Das Laserinterferometer 30 ist ausgebildet, um einen Abstand zwischen sich (bzw. dem Referenzpunkt) und einem Punkt der Manipulationseinheit, hier der Zylindermantelfläche des Oberteils 20O zu bestimmen (vgl. gestrichelte Peillinie 31). Bezüglich dem Punkt der Zylindermantelfläche bzw. allgemein bezüglich dem Messpunkt auf der Manipulationseinheit sei angemerkt, dass hier immer derselbe Punkt angepeilt wird (angepeilter Punkt), wobei, da sich ja die Manipulationseinheit bewegt (dreht), der Punkt der Zylindermantelfläche weiter rotiert. Anders ausgedrückt heißt das, dass das Laserinterferometer 30 immer auf dieselbe Position auf der Zylindermantelfläche gerichtet ist, so dass der Abstand zu selbige immer aus demselben Raumwinkel bestimmt werden kann. Ausgehend von der Annahme, dass die Zylindermantelfläche, die die so genannte physische Drehachse der rotierbaren Manipulationseinheit 20O bildet, eine ideal gekrümmte oder bekannte Oberfläche hat und ausgehend davon, dass das Objekt 18 auf der Symmetrieachse der Zylindermantelfläche positioniert ist, kann anhand des Abstands anhand der Veränderungen des Abstandes entlang der Trajektorie zumindest eine Dimension des Taumelfehlers für jede der einzelnen Durchstrahlungsaufnahmen bestimmt werden. Wie angedeutet, wird entsprechend bevorzugten Ausführungsbeispielen nicht nur ein absoluter Abstand bestimmt, sondern insbesondere eine Veränderung des Abstandes über die Trajektorie, d. h. also entlang der Rotation der physischen Drehachse 20O.

Ausgehend von einer Veränderung des Abstandes zwischen dem Referenzpunkt (vgl. Lagerung 30L) sowie dem angepeilten Punkt der sich bewegenden Manipulationseinheit ergibt sich also die Abweichung der Ist-Trajektorie von der Soll-Trajektorie. Hieraus sind dann Korrekturdaten entsprechend ermittelbar. Bezüglich der Korrekturdaten sei angemerkt, da ja nur eine Dimension des Taumelfehles ermittelt wurde, diese Veränderung in dieser Dimension nur ein Teil der Korrekturdaten darstellt.

Mittels der Korrekturdaten kann die Abweichung entweder rechentechnisch bei der Rekonstruktion des Objekts (passiv) oder auch aktiv durch Gegensteuern kompensiert werden, wie nachfolgend noch erläutert werden wird.

Entsprechend weiteren Ausführungsbeispielen ist es nicht nur möglich die Relativposition bzw. die Veränderung der Relativposition über die Trajektorie zu bestimmen, sondern auch absolute Abstände, insbesondere wenn die sonstigen geometrischen Beziehungen, wie z. B. die Position der Lagerung 30L gegenüber den Positionen 12L und 14L bekannt sind. Dies hat den Vorteil, dass beispielsweise mit einem ersten Laserinterferometer entlang einer ersten Achse der Objektstab 20O überwacht wird und die durch den Rückschluss, also auf die Objektposition des Objektes 18 möglich ist, während mit einem zweiten Laserinterferometer die Position des Brennfleckes in der Parallelachse überwachbar ist, so dass durch Differenzbildung dieser zwei Abstände ein Objekt-Brennfleck-Abstand bestimmbar ist. Dieser Abstand stellt bei vielen Rekonstruktionen einen wesentlichen Eingangsparameter dar. Durch die exakte Bestimmung von Brennfleck-Objekt-Abstand, der ja durch die exzentrische Bewegung des Objektes 18 und den Drift des Brennfleckes über die Messung bzw. Trajektorie variiert, liegt für jede Durchstrahlungsaufnahme der exakt bestimmte Objekt-Brennfleck-Abstand vor, so dass dieser bei der Rekonstruktion berücksichtigt werden kann. Dies führt im Resultat zu einer wesentlich verbesserten Rekonstruktion.

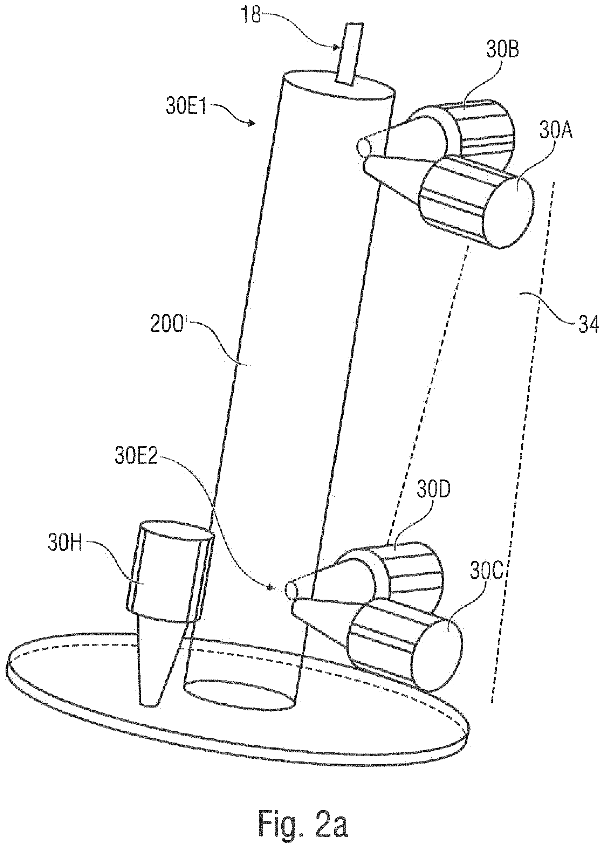

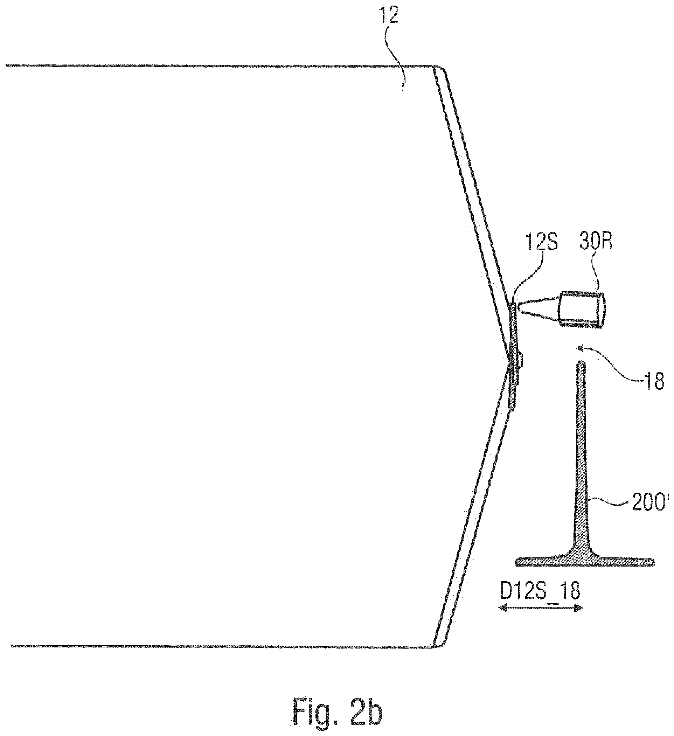

Bezug nehmend auf Fig. 2a werden weitere optionale Ausgestaltungen des hier dargestellten Ansatzes erläutert. Hierbei wird davon ausgegangen wird, dass das Taumeln nicht nur in einer Dimension, sondern bevorzug über drei Translations- und zwei Freiheitsgrade bestimmt wird. Bei Ausführungsbeispiel aus Fig. 2b wird auch noch zusätzlich die Position des Brennflecks bestimmt.

Fig. 2a zeigt den rotierbaren Probenstab 20O', wie z. B. einen Saphirstab. Die Geometrie bzw. insbesondere die Oberflächengeometrie ist im Vorfeld bestimmt. In dem einen Ende ist der Probenhalter vorgesehen, der die Probe 18 hält. Entsprechend Ausführungsbeispielen ist die Probe 18 direkt auf der Rotationsachse, d.h. also im Flächenschwerpunkt bzw. fluchtend mitselben des zylinderförmigen Stabes 20O' angeordnet.

Dieser ist in einer ersten Ebene 30E1 mit zwei Sensoren 30A und 30B und in einer zweiten Ebene 30B2 mit zwei Sensoren 30C und 30D überwacht. Bei den Sensoren handelt es sich um Laserinterferometer, die es ermöglichen ausgehend von ihrem Referenzpunkt den Abstand zu dem angezielten Punkt auf der Zylindermantelfläche des Objektträgerstabes 20O' zu ermitteln. Die zwei Ebenen 30E1 und 30E2 sind in unterschiedlichen Höhen, d.h. also in unterschiedlichen vertikalen Positionen in Bezug auf die Länge des Objektträgerstabes 20O' angeordnet. Wie zu erkennen ist, sind die Sensoren 30A und 30B bzw. die Sensoren 30C und 30D jeweils um einem vorbestimmten Winkel, hier um 90° versetzt (sodass die Messpunkte zusammen mit einem Schnittpunkt zwischen der gemeinsamen Ebene und einer Rotationsachse der physischen Drehachse den vorbestimmten Winkel einschließen), wobei die Sensoren 30A und 30C parallel ausgerichtet sind und die Sensoren 30B und 30D sind ebenfalls parallel.

Die Sensoren zugehörig zu einer Ebene, z. B. zu der Ebene 30E1 ermöglichen die Ermittlung der x- und y-Komponenten des translatorischen Taumelns, so dass also durch die zwei Sensoren 30A und 30B allein die Taumelbewegung (Exzentrizität der Zylindermantelfläche 20O' gegenüber der idealen Rotation derselben) festgestellt werden können. Unter Ergänzung der Sensoren 30C und 30D in einer unterschiedlichen vertikalen Anordnung, kann durch Differenzbildung der Sensorsignale der Sensoren 30A und 30C bzw. 30B und 30D auch noch eine Verkippung der Rotationsachse bzw. des Zylinders 20O' detektiert werden. In der Konsequenz sind also durch die Verwendung der Sensoren 30A bis 30D die Verkippung in zwei Freiheitsgraden sowie der translatorische Versatz in jedenfalls zwei Freiheitsgraden bestimmbar.

Entsprechend einem zusätzlichen Ausführungsbeispiel weist die Anordnung auch noch einen weiteren Sensor, nämlich den Sensor 30H auf. Dieser Sensor 30H ist senkrecht zu den vier Sensoren 30A bis 30D ausgerichtet und ermöglicht die Bestimmung einer Position des Objektmanipulators entlang der Rotationsachse zugehörig zu der Zylindermantelfläche 20O'. Durch die Ergänzung dieses Sensors 30H kann auch das Taumeln entlang der Längsachse bzw. der Rotationsachse des Probenstabes 20O' überwacht werden. Nachdem translatorische Abweichung in den drei Dimensionen bzw. die Kippabweichung in zwei Dimensionen je Punkt auf der Trajektorie bzw. für jede Durchstrahlungsaufnahme ermittelt sind können auf Basis der Abweichungen die Korrekturdaten ausgegeben werden. Wie bereits oben erläutert, ergibt sich auch auf Basis der Korrekturdaten zwei möglicher Strategien zur Korrektur der Bildartefakte:
1. Passive Korrektur - diese berücksichtigt die gemessenen Abweichungen implizit bei der Volumenbildrekonstruktion und vermeidet so das Entstehen von Bildartefakten.
2. Aktive Korrektur - die Probendrehachse wird aktiv während dem Scan durch zusätzliche Motoren nachgeführt, somit die Sollposition im Rahmen der geforderten Genauigkeit immer erreicht.

An dieser Stelle sei angemerkt, dass entsprechend bevorzugten Ausführungsbeispielen die Sensoren 30A bis 30D sowie 30H eine klare Referenz gegenüber dem Röntgensystem haben. Hierzu ist es bevorzugt, dass die Sensoren an einer externen Aufhängung, die mechanisch und thermisch nur geringsten Veränderungen unterliegt, aufgehängt sind. Hierbei eignet sich beispielsweise ein Referenzkörper, z. B. in Form eines Steinblocks. Da die Sensoren 30A und 30B sowie 30C und 30D sowie 30-H in unterschiedlichen Orientierungen angeordnet sind, wäre es auch denkbar, dass unterschiedliche Referenzelemente vorgesehen sind, bevorzugterweise so alle Sensoren an einem Raumwinkelblock angeordnet.

Bezug nehmend auf Fig. 2b wird das Vermessen der Röntgenquelle skizziert. Fig. 2b zeigt die Vermessung der Röntgenquelle 12 mit dem Sichtfenster 12S, wobei das Austrittsfenster zu der Probe 18 bzw. dem Probenhalter 20O' ausgerichtet sind. Wie schon eingangs erwähnt, unterliegt beispielsweise der Brennfleck der Röntgenquelle 12 einem thermischen Drift. Dieser Brennfleck ist hinter dem Austrittsfenster 12S angeordnet.

Um den Brennfleck zu vermessen, wird beispielsweise mittels eines zusätzlichen Sensors 30R, der auf das Austrittsfenster 12S, z. B. in einer in Bezug auf die Röntgenstrahlung entgegengesetzten Richtung ausgerichtet ist. Da die Röntgenstrahlung in Richtung des Objekts 18 strahlt, erfolgt also die Messung mittels des Laserinterferometers 30R zu untersuchenden Objekts. Entsprechend Ausführungsbeispielen kann der Sensor 30R auch auf einer gemeinsamen Befestigungseinheit mit einem der Sensoren, z.B. dem Sensor 30A aus Fig. 2a angeordnet sein, so dass diese beispielsweise parallel ausgerichtet sind. Dies hat den Vorteil, dass durch die Differenz dieser zwei Sensorsignale (korrigiert um einen eventuellen Versatz zwischen der Außenwand des Objektzylinders und dem Objekt an sich) direkt der Sensor-Objekt-Abstand bestimmt werden kann. Dieser Abstand ist mit dem Bezugszeichen D12S_18 versehen.

Bevorzugt sind die Sensoren 30a-30h senkrecht auf die zu messende Oberfläche ausgerichtet, wobei z.B., wenn die entsprechenden geometrischen Beziehungen bekannt sind, auch andere Winkel denkbar wären. Auch ist entsprechend weiteren Ausführungsbeispielen eine parallele Anordnung mit vergleichbaren abständen für einige Sensoren (z.B. 30a und 30c) sinnvoll.

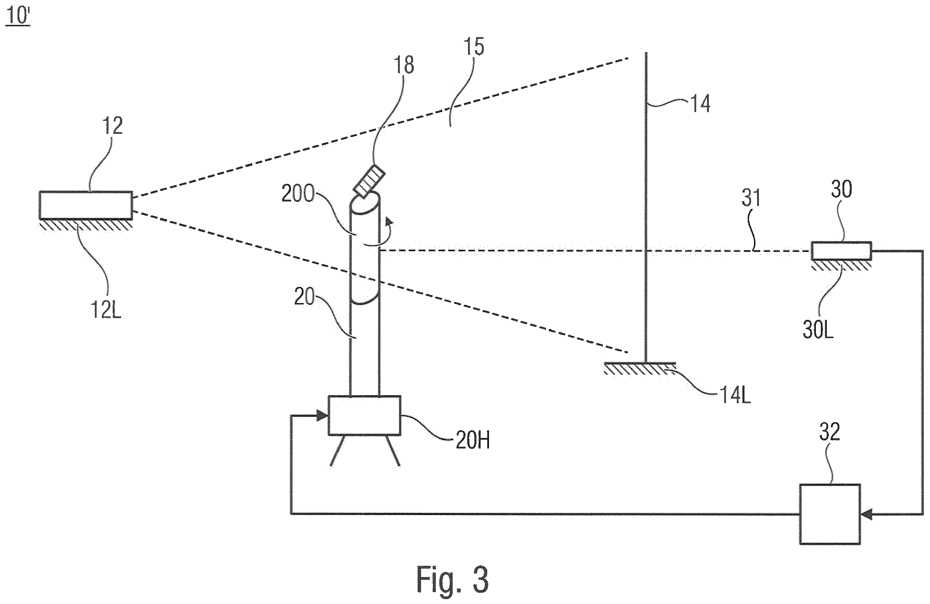

Fig. 3 zeigt ein Computer-Tomographiesystem 10', das mit dem Computertomographiesystem 10 vergleichbar ist. Hier ist exemplarisch ein Laserinterferometer 30 illustriert, wobei selbstverständlich auch weitere Laserinterferometer, wie z. B. die Laserinterferometer 30A bis 30D, 30H oder das Laserinterferometer 30S ergänzt sein kann. Das hier dargestellte Computertomographiesystem 10' unterscheidet sich dadurch, dass der Manipulator 20 um einen zusätzlichen Manipulator 20H, hier ein Hexapod, erweitert worden ist. Wie durch den Peil am Ausgang des Laserinterferometers 30 illustriert, ist dieser dazu ausgebildet die Korrekturdaten auszugeben, so dass mittels einer zwischengeschalteten Berechnungseinheit 32 der Hexapod 20H gesteuert werden kann. Diese Hexapod führt aktiv die Position des Manipulators 20 und damit auch des Objekts nach. Entsprechend weiteren Ausführungsbeispielen kann der Hexapod 20h auch mit dem Manipulator 20 kombiniert sein.

Bezüglich der hier dargestellten aktiven Korrektur sei angemerkt, dass diese deshalb vorteilhaft ist, weil keine gesonderte Softwarekorrektur, keine gesonderte Volumenbild- Rekonstruktionssoftware erforderlich ist, da die Daten, welche in dem CT-System erhalten werden, geometrisch fehlerfrei sind. Bezug nehmend auf obige Ausführungsbeispiele, besonders Ausführungsbeispiel aus Fig. 1 und 3, sei angemerkt, dass es sich bei den dargestellten CTs entsprechend Ausführungsbeispielen umso gennannte Mikro/Nanofokus-CTs handeln kann, die eine hohe Vergrößerung aufweisen. Die hohe Vergrößerung stellt starke Anforderungen an Präzision, lange Scan-Dauer und die Genauigkeit bzw. Exaktheit der Kreis-CT-Trajektorie. An dieser Stelle sei auch angemerkt, dass die Trajektorie, z. B. Helix-Trajektorien, Halbkreistrajektorien oder allgemein beliebige Trajektorien möglich wären.

Insbesondere bei diesen CT-Systemen kann eine deutliche Verbesserung der Scan-Qualität hinsichtlich der Auflösung, Kontrast und SNR (Signalrauschverhältnis) durch die aktive und passive Korrektur ermöglicht werden.

Entsprechend einem weiteren Ausführungsbeispiel kann das oben dargestellte CT-System aus Fig. 1 bzw. aus Fig. 3 um einen Rekonstruktionsberechner ausgebildet sein, von der ausgehend Durchstrahlungsaufnahmen die entsprechende Rekonstruktion übernimmt. Insbesondere bei dem Ausführungsbeispiel aus Fig. 1 kann, wie oben bereits angedeutet, eine passive Korrektur in den Rekonstruktionsalgorithmus implementiert sein. Diese passive Korrektur bietet den Vorteil von geringeren Anforderungen an mechanische Präzision, so dass auch andere Achstypen verwenden werden können, da beispielsweise in Vakuumaufbauten der Einsatz von luftgelagerten Achsen unmöglich ist. Generell lässt sich die Präzision mit der Größe der mechanischen Achsen nach (insbesondere bei Winkel-Fehler z.B. bei Drehtischen; Hintergrund: Unebenheit im Lager bedingt eine größere Kippung), so dass die passive Korrektur bei derart kompakten CT-Aufbauten viele Vorteile bietet.

Auch wenn bei obigen Ausführungsbeispielen immer von Röntgen-Computertomographien ausgegangen wurde, sei an dieser Stelle angemerkt, dass alle Geräte der Computertomographie, insbesondere die die das oben genannte Computerproblem aufweisen in Zusammenhang mit der oben erläuterten Vorrichtung bzw. dem oben erläuterten Verfahren zum Einsatz kommen können. Im speziellen betrifft das oben erläuterte Verfahren bzw. die Vorrichtung also alle Geräte, die Volumenbilder auf Basis von Durchstrahlungsbildern messen. Hierzu gehören auch die Neuronen- und Transmissions-Elektronentomographiesysteme (Photonen, Neuronen, Elektronen).

Auch wenn bei obigen Ausführungsbeispielen das Konzept insbesondere im Zusammenhang mit einer Vorrichtung erläutert wurden, sei darauf hingewiesen, dass ein Ausführungsbeispiel auf ein entsprechendes Verfahren zur Ermittlung der Korrekturdaten gerichtet ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Ermittlung von Korrekturdaten für ein CT-System (10, 10') mit einem um eine physische Drehachse (20R, 20O, 20O') rotierbaren Objektmanipulator (20), einer einen Brennfleck aufweisenden Röntgenquelle (12) und einem Röntgendetektor (14), mit folgenden Schritten:
Vermessen des Objektmanipulators mittels eines Laserinterferometers (30, 30A, 30B, 30C, 30D, 30H, 30R) und/oder Vermessen der Röntgenquelle (12) mittels des Laserinterferometers (30, 30A, 30B, 30C, 30D, 30H, 30R), um die Korrekturdaten zu ermitteln.

2. Verfahren gemäß Anspruch 1, wobei die Schritte des Vermessens des Objektmanipulators und/oder der Röntgenquelle (12) während des Betriebs des CT-Systems (10, 10') durchgeführt werden.

3. Verfahren gemäß Anspruch 1 oder 2, wobei die Schritte des Vermessens des Objektmanipulators und/oder der Röntgenquelle (12) für mehrere Punkte auf einer Trajektorie des um die physische Drehachse (20R, 20O, 20O') rotierbaren Objektmanipulators (20) und/oder für mehrere Durchstrahlungsaufnahmen wiederholt wird, und/oder
wobei das Verfahren den Schritt des Ausgebens von Korrekturdaten für jeden der mehreren Punkten auf der Trajektorie des um die physische Drehachse (20R, 20O, 20O') rotierbaren Objektmanipulators (20) und/oder für jede der mehrere Durchstrahlungsaufnahmen aufweist.

4. Verfahren gemäß einem der vorherigen Ansprüche, wobei das Vermessen des Objektmanipulators den Unterschritt des Anpeilens zumindest eines ersten Punkts der physischen Drehachse (20R, 20O, 20O') umfasst, um einen ersten Abstand zwischen einem Referenzpunkte des CT-System (10, 10') und dem angepeilten ersten Punkt der physischen Drehachse (20R, 20O, 20O') zu ermitteln und um ausgehend von dem ersten Abstand zumindest einen Teil der Korrekturdaten zu erhalten.

5. Verfahren gemäß Anspruch 4, wobei der Unterschritt des Anpeilens für zumindest einen zweiten Punkt der physischen Drehachse (20R, 20O, 20O') wiederholt wird, um einen zweiten Abstand zwischen einem Referenzpunkt des CT-Systems (10, 10') und dem angepeilten zweiten Punkt der physischen Drehachse (20R, 20O, 20O') zu ermitteln.

6. Verfahren gemäß Anspruch 5, wobei der erste und der zweite Punkt in einer gemeinsamen Ebene (30E1, 30E2) liegen und zusammen mit einem Schnittpunkt zwischen der gemeinsamen Ebene (30E1, 30E2) und einer Rotationsachse der physischen Drehachse (20R, 20O, 20O') einen vorbestimmten Winkel oder einen rechten Winkel einschließen; und/oder wobei die gemeinsame Ebene (30E1, 30E2) senkrecht zu der physischen Drehachse verläuft; und/oder
wobei zumindest vier Punkte der physischen Drehachse (20R, 20O, 20O') angepeilt.

7. Verfahren gemäß einem der Ansprüche 4 bis 6, wobei der Schritt des Anpeilens für einen weiteren Punkt der physikalischen Drehachse (20R, 20O, 20O') in einer unterschiedlichen Höhe wiederholt wird, um einen weiteren Abstand zwischen einem Referenzpunkt des Systems und der physischen Drehachsen (20R, 20O, 20O') zu ermitteln.

8. Verfahren gemäß einem der vorherigen Ansprüche, wobei das Vermessen des Objektmanipulators den Unterschritt des Anpeilens eines Punkts des Objektmanipulators entlang der Drehachse umfasst, um eine Höhe des Objektmanipulators ausgehend von einem Referenzpunkt des Systems zu ermitteln und um ausgehend von der Höhe zumindest einen Teil der Korrekturdaten zu erhalten.

9. Verfahren gemäß einem der Ansprüche 4 bis 8, wobei das Verfahren den Schritt des Berechnens eines Taumelfehlers des Objektmanipulators und/oder der physischen Drehachse (20R, 20O, 20O') umfasst; und/oder wobei beim Berechnen des Taumelfehlers eine Veränderung der Höhe und/oder des ersten Abstands über die Rotation des Objektmanipulators ermittelt wird.

10. Verfahren gemäß Anspruch 9, wobei die Berechnung des Taumelfehlers die Berechnung von drei translatorischen Fehlern und/oder von zwei Kippfehlern umfasst.

11. Verfahren gemäß einem der vorherigen Ansprüche, wobei der Schritt des Vermessens der Röntgenquelle (12) den Unterschritt des Anpeilens eines Punkts der Röntgenquelle (12) mittels des Laserinterferometers (30, 30A, 30B, 30C, 30D, 30H, 30R) umfasst, um einen Abstand zwischen einem weiteren Referenzpunkt des Systems und der Röntgenquelle (12) zu ermitteln.

12. Verfahren gemäß Anspruch 11, wobei beim Anpeilen eines Punkts der Röntgenquelle (12) der Brennfleck, eine Anode der Röntgenquelle oder ein Strahlaustrittsfenster (12S) der Röntgenquelle (12) angepeilt wird.

13. Verfahren gemäß Anspruch 11 oder 12, wobei das Verfahren den Schritt des Berechnens eines thermischen Drifts der Röntgenquelle (12) oder des Brennflecks umfasst.

14. Verfahren gemäß einem der vorherigen Ansprüche, wobei das Verfahren den Schritt des Berechnens der Korrekturdaten umfasst, wobei die Korrekturdaten ausgehend von ein oder mehreren Teilen der Korrekturdaten für einen Punkt auf einer Trajektorie des um die physische Drehachse (20R, 20O, 20O') rotierbaren Objektmanipulators (20) und/oder für eine Durchstrahlungsaufnahme berechnet ist.

15. Verfahren gemäß Anspruch 14, wobei das Berechnen der Korrekturdaten den Unterschritt der Differenzbildung von zumindest zwei Abständen zu der physischen Drehachse (20R, 20O, 20O') umfasst, um einen Taumelfehler zu ermitteln; und/oder
wobei der Schritt des Berechnens der Korrekturdaten den Unterschritt der Differenzbildung von zumindest einem Abstand zu der physikalischen Drehachse (20R, 20O, 20O') und einem Abstand zu der Röntgenquelle (12) umfasst, um einen Objekt-Quelle-Abstand zu ermitteln.

16. Verfahren gemäß einem der vorherigen Ansprüche, wobei das Verfahren den Schritt der CT-Rekonstruktion eines mittels des CT-Systems (10, 10') untersuchten Objekts ausgehend von zumindest zwei genommenen Durchstrahlungsaufnahmen umfasst, wobei bei der CT-Rekonstruktion die Korrekturdaten Berücksichtigung finden.

17. Verfahren gemäß einem der vorherigen Ansprüche, wobei das Verfahren den Schritt des aktiven Nachführens des Objektmanipulators oder eines mittels des CT-Systems zu untersuchenden Objekts relativ zu dem CT-System (10, 10') umfasst, wobei das aktive Nachführen auf Basis der Korrekturdaten erfolgt.

18. Computerprogramm mit einem Programmcode zur Durchführung eines Verfahrens nach einem der vorherigen Ansprüche, wenn das Programm auf einem Computer abläuft.

19. Vorrichtung (30) zur Ermittlung von Korrekturdaten für ein CT-System (10, 10') mit einem um eine physische Drehachse (20R, 20O, 20O') rotierbaren Objektmanipulator (20), einer einen Brennfleck aufweisenden Röntgenquelle (12)und einem Röntgendetektor (14), mit folgenden Merkmalen: einem Laserinterferometer (30, 30A, 30B, 30C, 30D, 30H, 30R), das ausgebildet ist, um den Objektmanipulator oder die Röntgenquelle (12) zu vermessen, um ein Messergebnis auszugeben; einer Berechnungseinheit, die ausgebildet ist, um ausgehend von dem Messergebnis Korrekturdaten zu ermitteln.

20. Vorrichtung (30) gemäß Anspruch 19, wobei das Laserinterferometer (30, 30A, 30B, 30C, 30D, 30H, 30R) ein Michelson-Laserinterferometer (30, 30A, 30B, 30C, 30D, 30H, 30R) oder ein Fabry-Perot-Interferometer umfasst.

21. Vorrichtung (30) gemäß Anspruch 19 oder 20, wobei die Vorrichtung (30) eine Mehrzahl an Laserinterferometern (30, 30A, 30B, 30C, 30D, 30H, 30R) umfasst, um mehrere Punkte des Objektmanipulators oder einen Punkt des Objektmanipulators und einen Punkt der Röntgenquelle (12) zu bestimmen.

22. Vorrichtung (30) gemäß einem der Ansprüche 19 bis 21, wobei zumindest ein Laserinterferometer (30, 30A, 30B, 30C, 30D, 30H, 30R) auf einen Punkt der physischen Drehachse (20R, 20O, 20O') ausgerichtet ist.

23. Vorrichtung (30) gemäß einem der Ansprüche 19 bis 22, wobei zumindest ein Laserinterferometer (30, 30A, 30B, 30C, 30D, 30H, 30R) auf dem Brennfleck, eine Anode der Röntgenquelle (12) oder ein Strahlaustrittsfenster (12S) der Röntgenquelle (12) ausgerichtet ist.

24. Vorrichtung (30) gemäß einem der Ansprüche 19 bis 23, wobei zumindest ein Laserinterferometer (30, 30A, 30B, 30C, 30D, 30H, 30R) an einem Referenzelement angeordnet ist, wobei eine geometrische Beziehung zwischen dem Referenzelement und dem Röntgensystem bekannt ist.

25. Vorrichtung (30) gemäß Anspruch 24, wobei das Referenzelement ein Gestein umfasst.

26. Vorrichtung (30) gemäß einem der Ansprüche 19 bis 25, wobei die physische Drehachse (20R, 20O, 20O') eine Zylindermantelfläche umfasst und/oder wobei die physische Drehachse (20R, 20O, 20O') einen Saphirstab oder Glasstab umfasst; und/oder
wobei die geometrischen Abmessungen der physischen Drehachse (20R, 20O, 20O') sowie die Beziehung zu dem Objektaufnahmepunkt der physischen Drehachse (20R, 20O, 20O') bekannt sind.

27. CT-System mit dem um die physische Drehachse (20R, 20O, 20O') rotierbaren Objektmanipulator (20), der den Brennfleck aufweisenden Röntgenquelle (12) und dem Röntgendetektor (14); sowie
einer Vorrichtung (30) gemäß einem der Ansprüche 19 bis 26.

28. CT-System gemäß Anspruch 27, wobei das System einen Rekonstruktionsberechner aufweist, der ausgebildet ist, ausgehend von einer Messung eines zu untersuchenden Objekts mittels des CT-Systems eine CT-Rekonstruktion des Objekts durchzuführen, wobei die CT-Rekonstruktion unter Berücksichtigung der Korrekturdaten erfolgt.

29. CT-System gemäß Anspruch 27 und 28, wobei der Objektmanipulator ausgebildet ist, um das Objekt in Abhängigkeit von den Korrekturdaten relativ zu der Röntgenquelle (12) und/oder dem Röntgendetektor (14) zu bewegen.

30. CT-System gemäß Anspruch 29, wobei der Objektmanipulator einen Hexapod umfasst; und/oder
wobei der Objektmanipulator ausgebildet ist, das Objekt translatorisch gegenüber der Röntgenquelle (12) und/oder dem Röntgendetektor (14) zu bewegen und/oder gegenüber der Röntgenquelle (12) und/oder dem Röntgendetektor (14) zu verkippen.
